# EUROPEAN PATENT SPECIFICATION

(11) **EP 4 481 529 B1**
(45) Date of publication and mention of the grant of the patent: **12.08.2026**
(21) Application number: 24180417.8
(22) Date of filing: 06.06.2024
(51) Int. Cl.: G05D 1/225, G05D 1/249, G05D 1/646, G06V 10/62, G06V 10/82, G06V 20/52

(54) **SYSTEM, CONTROLLER, AND CONTROL METHOD**
SYSTEM, STEUERUNG UND STEUERUNGSVERFAHREN
SYSTÈME, CONTRÔLEUR ET PROCÉDÉ DE COMMANDE

(30) Priority: 23.06.2023 JP 2023103563
(43) Date of publication of application: 25.12.2024
(73) Proprietor: TOYOTA JIDOSHA KABUSHIKI KAISHA, Aichi-ken, 471-8571 (JP)
(72) Inventor: IWAHORI, Kento, Toyota-shi, 471-8571 (JP); YOKOYAMA, Daiki, Toyota-shi, 471-8571 (JP)
(74) Representative: J A Kemp LLP

(56) References cited:
- EP-A1- 4 425 403
- EP-B1- 2 150 772
- JP-A- 2021 062 790

## Description

### CROSS REFERENCE TO RELATED APPLICATIONS

The present application claims priority from Japanese patent application JP2023-103563 filed on June 23, 2023.

### BACKGROUND

### FIELD

The present disclosure relates to a system, a controller, and a control method.

### RELATED ART

Japanese Patent Application Publication (Translation of PCT Application) No. 2017-538619 discloses a technique of causing a vehicle to run by unmanned driving in a step of manufacturing the vehicle. EP 4 425 403 A1 discloses a moving object, server device, system, and method for managing an on-moving object device. JP 2021 062790 A discloses a transfer system of a vehicle. EP 2 150 772 B1 discloses a method for use with an optical aligner system for positioning a fixture relative to a vehicle.

There is a known technique of causing a moving object to move by unmanned driving using a captured image resulting from image capturing of the moving object using a camera. However, merely performing image capturing of the moving object may make it impossible to acquire a captured image suitable for unmanned driving if the moving object is exposed to strong sunlight or if the moving object makes turning motion, for example.

### SUMMARY

The present disclosure is feasible in the following aspects.

According to one aspect of the present disclosure, a system is provided. The system comprises: a moving object that moves by unmanned driving using a predetermined detection point included in an image for detection resulting from image capturing of the moving object; an image acquisition unit that acquires the image for detection; an environmental information acquisition unit that acquires environmental information indicating an environment in which the moving object moves by the unmanned driving, wherein the environmental information includes at least one of information indicating timing of moving of the moving object by the unmanned driving and information indicating a place where the moving object moves by the unmanned driving; and a first determination unit that determines a part of the moving object to be used as the detection point in response to the acquired environmental information. The first determination unit determines the part to be a left side part or a right side part of the moving object alternatively in response to the environmental information.

According to this aspect, it is possible to determine the part of the moving object to be used as the detection point or the image capturing direction of capturing the image for detection in response to the environment in which the moving object moves by unmanned driving. This allows the image for detection suitable for unmanned driving of the moving object to be acquired with higher possibility.

According to this aspect, it is possible to use the left side part or the right side part of the moving object as the detection point in response to the environmental information.

According to this aspect, it is possible to determine the part of the moving object to be used as the detection point or the image capturing direction of capturing the image for detection in response to timing or a place of moving of the moving object by unmanned driving.

In the above-described aspect, the system may comprise: a plurality of cameras for image capturing of the moving object; and a second determination unit that determines the camera of the plurality of cameras as a responsible camera to capture the image for detection in response to the environmental information. The determined camera is available for capturing the image for detection in such a manner as to fulfill a condition relating to the at least one of the determined part and the determined image capturing direction. The image acquisition unit may acquire the image for detection from the responsible camera. According to this aspect, it is possible to determine the camera responsible for capturing of the image for detection appropriately in response to the environmental information.

In the above-described aspect,.

In the above-described aspect, the first determination unit may determine the part to be a left rear corner or a right rear corner of the moving object alternatively in response to the environmental information. According to this aspect, it is possible to use the left rear corner or the right rear corner of the moving object as the detection point in response to the environmental information.

In the above-described aspect, the system may comprise a third determination unit that determines details of an estimating process in response to the at least one of the determined part and the determined image capturing direction. The estimating process is a process of estimating a location of the moving object to be used for generating a control command for the unmanned driving using the detection point in the image for detection. According to this aspect, it is possible to determine the details of the estimating process in response to the part of the moving object determined as the detection point or the determined image capturing direction. This allows the location of the moving object to be estimated with higher accuracy and with higher possibility during the estimating process.

In the above-described aspect, the moving object may be a vehicle, and the first determination unit may determine at least the part to be used as the detection point, the first determination unit may determine the part to be a first part or a second part of the vehicle alternatively symmetrical to each other in a width direction of the vehicle in response to the environmental information, the first part being a left rear corner of the vehicle and the second part being a right rear corner of the vehicle, if the second part is used as the detection point, the third determination unit may determine to perform a process in the estimating process, the determined process being a process of generating a reversed image by mirror-reversing the image for detection and detecting the second part in the reversed image, and if the first part is used as the detection point, the third determination unit may determine to perform a process in the estimating process, the determined process being a process of detecting the first part in the image for detection without being mirror-reversed. According to this aspect, it is possible to detect the first part and the second part by following the procedure common between the case where the first part is used as the detection point and the case where the second part is used as the detection point except for the mirror reversing of the image for detection.

In the above-described aspect, third determination unit may determine the details of the estimating process by determining a program to be used in the estimating process in response to the at least one of the determined part and the determined image capturing direction. According to this aspect, by causing the third determination unit to determine the program, it becomes possible to determine the details of the estimating process in response to the part of the moving object determined as the detection point or the determined image capturing direction.

The present disclosure is feasible in various aspects such as a moving object, a controller, a control method, a computer program for realizing such a control method, and a non-transitory recording medium storing such a computer program, for example, other than the aspect as the above-described system. As another example, for unmanned driving of the moving object, the above-described system may detect the detection point in the image for detection by inputting the image for detection to a machine learning model prepared in advance.

### BRIEF DESCRIPTION OF THE DRAWINGS

Fig. 1 is a conceptual view showing the configuration of a system;
Fig. 2 is a block diagram showing the configurations of a vehicle ad a controller;
Fig. 3A is a flowchart showing a processing procedure of running control over the vehicle according to a first embodiment;
Fig. 3B is a flowchart of a determining process;
Fig. 4 is a first view explaining the determining process according to the first embodiment;
Fig. 5 is a second view explaining the determining process according to the first embodiment;
Fig. 6 is a third view explaining the determining process according to the first embodiment;
Fig. 7 is a flowchart of an estimating process;
Fig. 8 is an explanatory view of an example showing how an image is analyzed in the estimating process;
Fig. 9 is a first view explaining a determining process according to a second embodiment;
Fig. 10 is a second view explaining the determining process according to the second embodiment;
Fig. 11 is a block diagram showing the configuration of a system according to a

### third embodiment; and

Fig. 12 is a flowchart showing a processing procedure of running control over a vehicle according to the third embodiment.

### DETAILED DESCRIPTION

### A. First Embodiment

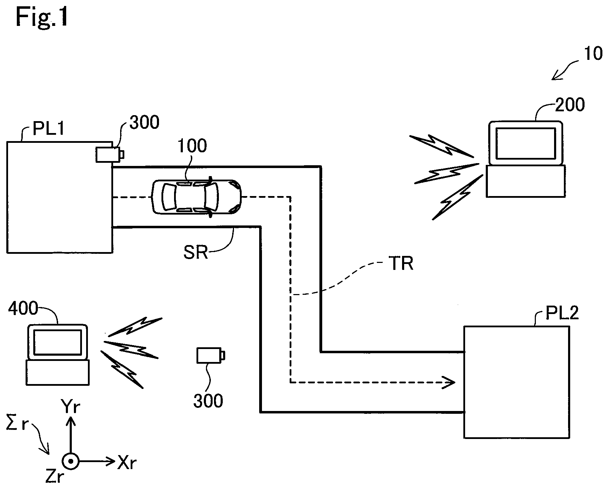

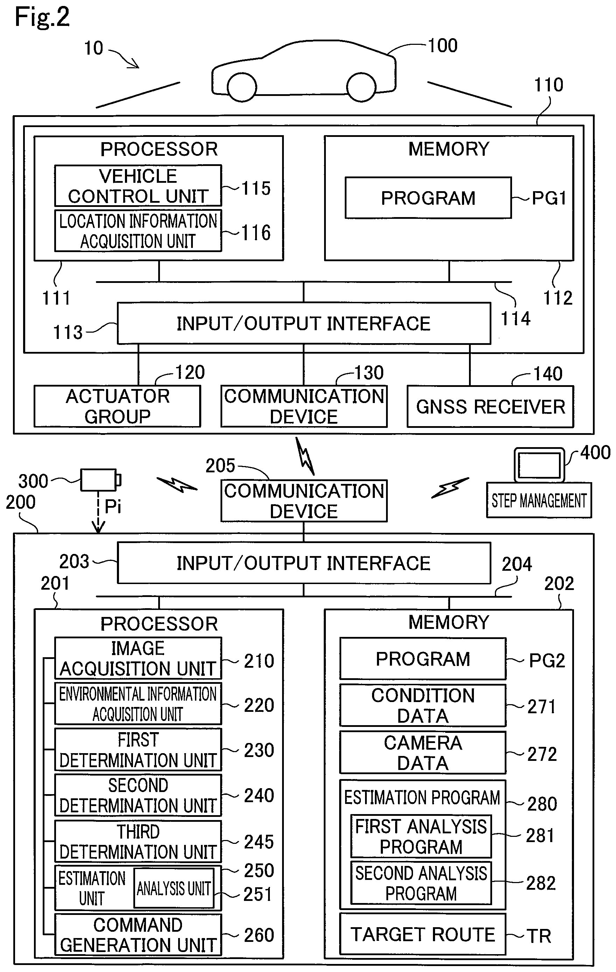

Fig. 1 is a conceptual view showing the configuration of a system 10 according to a first embodiment. Fig. 2 is a block diagram showing the configurations of a vehicle 100 and a controller 200. In the present embodiment, the system 10 is configured as a remote control system that causes the vehicle 100 as a moving object to run by remote control. The system 10 includes one or more vehicles 100, the controller 200 that implements remote control over the vehicle 100, a plurality of cameras 300 for capturing of a captured image Pi resulting from image capturing of the vehicle 100, and a step management device 400 that manages a step of manufacturing the vehicle 100.

In the present disclosure, the "moving object" means an object capable of moving, and is a vehicle or an electric vertical takeoff and landing aircraft (so-called flying-automobile), for example. The vehicle may be a vehicle to run with a wheel or may be a vehicle to run with a continuous track, and may be a passenger car, a track, a bus, a two-wheel vehicle, a four-wheel vehicle, a construction vehicle, or a combat vehicle, for example. The vehicle includes a battery electric vehicle (BEV), a gasoline automobile, a hybrid automobile, and a fuel cell automobile. When the moving object is other than a vehicle, the term "vehicle" or "car" in the present disclosure is replaceable with a "moving object" as appropriate, and the term "run" is replaceable with "move" as appropriate.

The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving."

In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

The vehicle 100 of the present embodiment is a battery electric vehicle (BEV). The vehicle 100 is not limited to a battery electric vehicle but may be a gasoline vehicle, a hybrid vehicle, or a fuel cell vehicle, for example.

In the present embodiment, remote control over the vehicle 100 is implemented in a factory where the vehicle 100 is manufactured. As shown in Fig. 1, the factory of the present embodiment has a first place PL1 and a second place PL2. The first place PL1 is a place for implementation of assembly of the vehicle 100, for example. The second place PL2 is a place for implementation of inspection on the vehicle 100, for example. An arbitrary location in the factory is expressed by xyz coordinate values in a reference coordinate system RC. The reference coordinate system RC is defined as a global coordinate system, for example. The first place PL1 and the second place PL2 are connected to each other via a track SR allowing the vehicle 100 to run therethrough. The track SR may not have to be a continuous track such as that shown in Fig. 1 but may be a track branching into a plurality of tracks along the way or a track with which a plurality of tracks merges along the way. In such cases, a track on which the vehicle 100 is to run may be determined in response to the type of the vehicle 100 (vehicle type, model code, grade, or power source, for example), inspection result about the vehicle 100, a congestion level on each track, or a congestion level in a next step, for example. For such a way of determining a track, manufacturing information described later may be used, for example.

The first place PL1 and the second place PL2 may be provided in the same building or in different buildings in the same site. The first place PL1 and the second place PL2 may be provided outdoors, not indoors. The first place PL1 and the second place PL2 may be provided separately in a plurality of sites and may be provided separately in a first factory and a second factory next to each other across a public road or a private road, for example. In this case, the first factory and the second factory are called a factory collectively and the track SR may include a part of the public road or a part of the private road.

The plurality of cameras 300 each configured to be available for capturing an image of the vehicle 100 is installed around the track SR. Using the captured image Pi captured by each camera 300, the controller 200 is capable of acquiring information such as a location, an orientation or a running direction of the vehicle 100 relative to a target route TR in real time. The information such as the location, the position, or the running direction detected in this way is used for generating a control command for remote control over the vehicle 100. In the present embodiment, each camera 300 is arranged in a way allowing capturing of an image where the track SR is viewed from above. The location of each camera 300 is fixed. A correlation between the reference coordinate system RC and a device coordinate system of each camera 300 (hereinafter also called a camera coordinate system) is known. The controller 200 contains a coordinate transformation matrix stored in advance therein for interconversion between a coordinate value in the reference coordinate system RC and a coordinate value in the device coordinate system of each camera 300. Remote control over the vehicle 100 may be implemented using each type of vehicle-mounted camera mounted on the vehicle 100 or each type of sensor such as a light detection and ranging (LiDAR) sensor, a millimeter wave radar, an ultrasonic wave sensor, or an infrared sensor supplementarily, for example.

The controller 200 of the present embodiment is configured as a remote controller that generates the above-described control command and transmits the control command to the vehicle 100. More specifically, the controller 200 generates a control command for causing the vehicle 100 to run along the target route TR and transmits the control command to the vehicle 100. The vehicle 100 runs by following the received control command. This allows the system 10 to move the vehicle 100 from the first place PL1 to the second place PL2 by remote control without using a conveyance device such as a crane or a conveyer. In the following, the controller 200 will also be called a "server 200."

As shown in Fig. 2, the vehicle 100 includes a vehicle controller 110 for controlling each part of the vehicle 100, an actuator group 120 to be driven under control by the vehicle controller 110, a communication device 130 for communicating with the controller 200 via radio communication, and a global navigation satellite system (GNSS) receiver 140 for acquiring location information about the vehicle 100. In the present embodiment, the actuator group 120 includes an actuator of a driving device for accelerating the vehicle 100, an actuator of a steering device for changing a traveling direction of the vehicle 100, and an actuator of a braking device for decelerating the vehicle 100. The driving device includes a battery, a motor for running to be driven by power from the battery, and a drive wheel to be rotated by the motor for running. The actuator of the driving device includes the motor for running. The actuator group 120 may further include an actuator for swinging motion of a wiper of the vehicle 100, an actuator for opening and closing a power window of the vehicle 100, etc., for example.

The vehicle controller 110 is configured using a computer including a processor 111, a memory 112, an input/output interface 113, and an internal bus 114. The processor 111, the memory 112, and the input/output interface 113 are connected to each other via the internal bus 114 in a manner allowing bidirectional communication therebetween. The actuator group 120, the communication device 130, and the GNSS receiver 140 are connected to the input/output interface 113.

In the present embodiment, the processor 111 executes a program PG1 stored in advance in the memory 112 to function as a vehicle control unit 115 and a location information acquisition unit 116. The vehicle control unit 115 controls the actuator group 120. While a driver is on the vehicle 100, the vehicle control unit 115 controls the actuator group 120 in response to operation by the driver, thereby allowing the vehicle 100 to run. Independently of whether a driver is on the vehicle 100, the vehicle control unit 115 also allows the vehicle 100 to run by controlling the actuator group 120 in response to a control command transmitted from the controller 200. The location information acquisition unit 116 acquires location information indicating a current location of the vehicle 100 using the GNSS receiver 140. Meanwhile, the location information acquisition unit 116 and the GNSS receiver 140 are omissible.

The controller 200 is configured using a computer including a processor 201, a memory 202, an input/output interface 203, and an internal bus 204. The processor 201, the memory 202, and the input/output interface 203 are connected to each other via the internal bus 204 in a manner allowing bidirectional communication therebetween. A communication device 205 for communicating with the vehicle 100, the camera 300, and the step management device 400 via radio communication is connected to the input/output interface 203.

In the present embodiment, the processor 201 executes a program PG2 stored in advance in the memory 202 to function as an image acquisition unit 210, an environmental information acquisition unit 220, a first determination unit 230, a second determination unit 240, a third determination unit 245, an estimation unit 250, and a command generation unit 260. The memory 202 contains condition data 271, camera data 272, and an estimation program 280 described later in addition to the program PG2. The estimation program 280 includes an analysis program described later.

The image acquisition unit 210 acquires the captured images Pi from the camera 300. Of these captured images Pi, the captured image Pi including a predetermined detection point is also called an image for detection. A part of the vehicle 100 is used as the detection point. The detection point in the image for detection is used for unmanned driving. More specifically, the detection point in the image for detection is used for estimating the location of the vehicle 100, and the estimated location of the vehicle 100 is used for generating a control command for unmanned driving.

The environmental information acquisition unit 220 acquires environmental information indicating an environment in which the vehicle 100 runs by unmanned driving (hereinafter also called an "environment related to running"). The environment related to running indicated by the environmental information has a potential to impact on the image for detection acquired by the image acquisition unit 210. The environmental information of the present embodiment includes running place information indicating a place where the vehicle 100 runs by unmanned driving (hereinafter also called a running place). The running place where the vehicle 100 runs influences the locations or angles of the vehicle 100 and each camera 300 relative to each other, so that the running place might be influential on the image for detection. The running place information of the present embodiment includes current location information about the vehicle 100 on the track SR. The "current location information about the vehicle 100" may be information indicating at least current whereabouts of the vehicle 100 broadly. The controller 200 and the step management device 400 acquire such current location information using the GNSS receiver 140, an area sensor (not shown in the drawings) provided around the track SR, or each type of sensor (such as the camera 300, for example) described above used for unmanned driving provided around the track SR, for example. Using the current location information and the target route TR about the vehicle 100, it is possible to identify a place where the vehicle 100 is scheduled to run in the future such as a section where the vehicle 100 is scheduled to run in the future, for example.

The first determination unit 230 determines at least one of a part for detection corresponding to a part of the vehicle 100 to be used as the detection point, and an image capturing direction of capturing the image for detection in response to the environmental information acquired by the environmental information acquisition unit 220. In the present embodiment, the first determination unit 230 determines the part for detection. In the following, a condition relating to at least one of the part for detection and the image capturing direction determined by the first determination unit 230 will also be called an image condition.

In the present embodiment, the first determination unit 230 determines the part for detection by referring to the condition data 271 in response to the environmental information. The condition data 271 of the present embodiment is data containing association between the environment related to running and a part of the vehicle 100 that might be available as the detection point. More specifically, the condition data 271 of the present embodiment is indicating a part of the vehicle 100 to be used as the detection point at each section in the track SR.

The second determination unit 240 determines a responsible camera to be responsible for capturing of the image for detection in response to the environmental information. The responsible camera determined in this way is the camera 300 available for capturing an image of the vehicle 100 under the determined image condition. In the present embodiment, the responsible camera is the camera 300 available for acquiring the captured image Pi including the part for detection.

In the present embodiment, the second determination unit 240 determines the responsible camera by referring to the camera data 272 in response to the environmental information. The camera data 272 is data containing association between the environment related to running and each camera 300. More specifically, the camera data 272 of the present embodiment is data indicating identification information about each camera 300 to be responsible for capturing of the image for detection in each section in the track SR. The camera data 272 is defined in such a manner that the camera 300 available for capturing the image for detection fulfilling the determined image condition is determined as the responsible camera in every section in the track SR.

The estimation unit 250 performs an estimating process. The estimating process is a process of estimating the location of the vehicle 100 as a subject of control by unmanned driving using the detection point in the image for detection. The estimating process of the present embodiment includes an analyzing process and a process of estimating the location of the vehicle 100 using result of the analyzing process. The analyzing process is a process of detecting the detection point in the image for detection by analyzing the image for detection. In the present embodiment, the estimation unit 250 executes the estimation program 280 to perform the estimating process. The estimation unit 250 is capable of estimating the location and orientation of the vehicle 100 using a running history of the vehicle 100 or location information detected by the GNSS receiver 140 mounted on the vehicle 100, for example. It is possible to estimate a running direction of the vehicle 100 using the orientation or a running history of the vehicle 100 or using a history of a control command.

The estimation unit 250 of the present embodiment includes an analysis unit 251 that performs the above-described analyzing process. The analysis unit 251 of the present embodiment performs a first analysis program 281 or a second analysis program 282 each functioning as an analysis program to perform the analyzing process. The analysis program is a program for causing a computer to realize a function of analyzing the image for detection and detecting the detection point in the image for detection by causing the computer to execute the analysis program.

The third determination unit 245 determines details of the estimating process in response to the image condition, namely, in response to at least one of the determined part for detection and the determined image capturing direction. The third determination unit 245 of the present embodiment determines a program to be used in the estimating process in response to the image condition, thereby determining the details of the estimating process in response to the image condition. More specifically, the third determination unit 245 determines a program for detection in response to the image condition. The program for detection is an analysis program to be used for detecting the detection point in the image for detection in the analyzing process. In the present specification, "determining the program in response to the image condition" means determining a processing step in the program in response to the image condition. The meaning of "determining the program in response to the image condition" includes selecting one analysis program as a program to be determined in response to the image condition from a plurality of programs prepared in advance, for example. In this case, the program for detection may be selected by implementing conditional branching responsive to the image condition in a comprehensive program including a plurality of programs, for example. The meaning of "determining the program in response to the image condition" includes preparing a program to be determined by rewriting some or all of codes in the program in response to the image condition, for example.

The above-described estimation program 280 is a comprehensive program including the first analysis program 281 and the second analysis program 282 as analysis programs. The first analysis program 281 and the second analysis program 282 will be described later in detail.

The command generation unit 260 generates a control command for unmanned driving using the location and orientation of the vehicle 100 estimated by the estimation unit 250, and transmits the control command to the vehicle 100. This control command is a command for causing the vehicle 100 to run along the target route TR stored in the memory 202. The target route TR of the present embodiment corresponds to a reference route described later. In the present embodiment, the control command includes a running control signal described later. In other embodiments, the control command may include generation information for generating the running control signal instead of or in addition to the running control signal. The generation information may be information such as vehicle location information, a route, or a target location described later, for example.

The step management device 400 is configured using a computer, for example, and manages an entire step of manufacturing the vehicle 100 in the factory. For example, when one vehicle 100 starts running along the target route TR, individual information indicating an identification number or a model code for identifying this vehicle 100 is transmitted from the step management device 400 to the controller 200. This individual information corresponds to manufacturing information used in managing the step of manufacturing the vehicle 100. The location of the vehicle 100 detected by the controller 200 is also transmitted to the step management device 400. The function of the step management device 400 may be implemented in the same device as the controller 200.

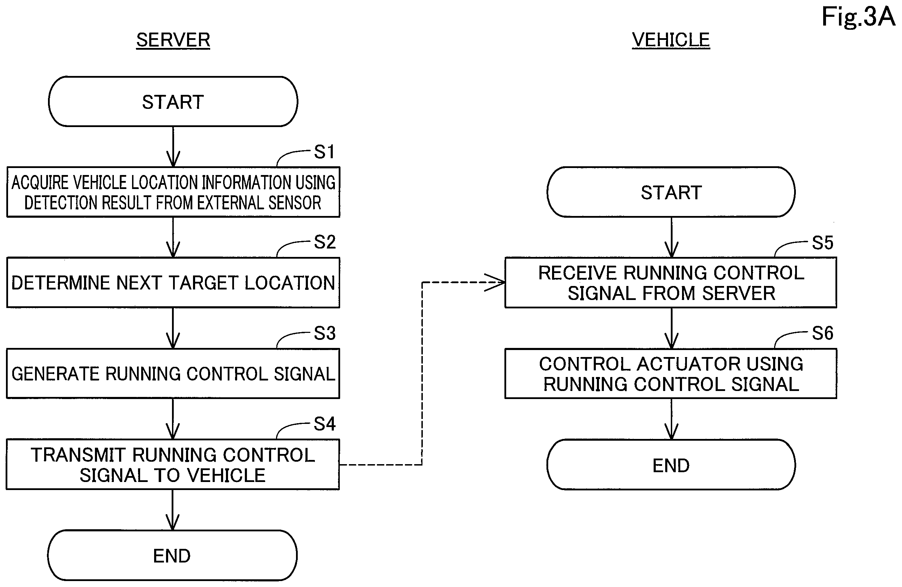

FIG. 3A is a flowchart showing a processing procedure for running control of the vehicle 100 in the first embodiment. In step S1, the server 200 acquires vehicle location information using detection result output from an external sensor. The external sensor is located outside the vehicle 100. The vehicle location information is locational information as a basis for generating a running control signal. In the present embodiment, the vehicle location information includes the location and orientation of the vehicle 100 in a reference coordinate system of the factory. In the present embodiment, the reference coordinate system of the factory is a global coordinate system and a location in the factory can be expressed by X, Y, and Z coordinates in the global coordinate system. In the present embodiment, the external sensor is a camera that is disposed in the factory and outputs a captured image as detection result. In step S1, the server 200 acquires the vehicle location information using the captured image acquired from the camera as the external sensor.

More specifically, in step S1, the server 200 for example, determines the outer shape of the vehicle 100 from the captured image, calculates the coordinates of a positioning point of the vehicle 100 in a coordinate system of the captured image, namely, in a local coordinate system, and converts the calculated coordinates to coordinates in the global coordinate system, thereby acquiring the location of the vehicle 100. The outer shape of the vehicle 100 in the captured image may be detected by inputting the captured image to a detection model using artificial intelligence, for example. The detection model is prepared in the system 10 or outside the system 10. The detection model is stored in advance in a memory of the server 200, for example. An example of the detection model is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model and the label. The server 200 can acquire the orientation of the vehicle 100 through estimation based on the direction of a motion vector of the vehicle 100 detected from change in location of a feature point of the vehicle 100 between frames of the captured images using optical flow process, for example.

More specifically, in S1 of the present embodiment, the above-described image for detection is used in acquiring vehicle location information. The vehicle location information is acquired by implementation of the estimating process. The responsible camera to be responsible for capturing of the image for detection and details of the estimating process are determined by a determining process described later.

In step S2, the server 200 determines a target location to which the vehicle 100 is to move next. In the present embodiment, the target location is expressed by X, Y, and Z coordinates in the global coordinate system. The memory of the server 200 contains a reference route stored in advance as a route along which the vehicle 100 is to run. The route is expressed by a node indicating a departure place, a node indicating a way point, a node indicating a destination, and a link connecting nodes to each other. The server 200 determines the target location to which the vehicle 100 is to move next using the vehicle location information and the reference route. The server 200 determines the target location on the reference route ahead of a current location of the vehicle 100.

In step S3, the server 200 generates a running control signal for causing the vehicle 100 to run toward the determined target location. In the present embodiment, the running control signal includes an acceleration and a steering angle of the vehicle 100 as parameters. The server 200 calculates a running speed of the vehicle 100 from transition of the location of the vehicle 100 and makes comparison between the calculated running speed and a target speed of the vehicle 100 determined in advance. If the running speed is lower than the target speed, the server 200 generally determines an acceleration in such a manner as to accelerate the vehicle 100. If the running speed is higher than the target speed as, the server 200 generally determines an acceleration in such a manner as to decelerate the vehicle 100. If the vehicle 100 is on the reference route, server 200 determines a steering angle and an acceleration in such a manner as to prevent the vehicle 100 from deviating from the reference route. If the vehicle 100 is not on the reference route, in other words, if the vehicle 100 deviates from the reference route, the server 200 determines a steering angle and an acceleration in such a manner as to return the vehicle 100 to the reference route. In other embodiments, the running control signal may include the speed of the vehicle 100 as a parameter instead of or in addition to the acceleration of the vehicle 100.

In step S4, the server 200 transmits the generated running control signal to the vehicle 100. The server 200 repeats the acquisition of vehicle location information, the determination of a target location, the generation of a running control signal, the transmission of the running control signal, and others in a predetermined cycle.

In step S5, the vehicle 100 receives the running control signal transmitted from the server 200. In step S6, the vehicle 100 controls an actuator of the vehicle 100 using the received running control signal, thereby causing the vehicle 100 to run at the acceleration and the steering angle indicated by the running control signal. The vehicle 100 repeats the reception of a running control signal and the control over the actuator in a predetermined cycle. According to the system 10 in the present embodiment, it becomes possible to move the vehicle 100 without using a transport unit such as a crane or a conveyor.

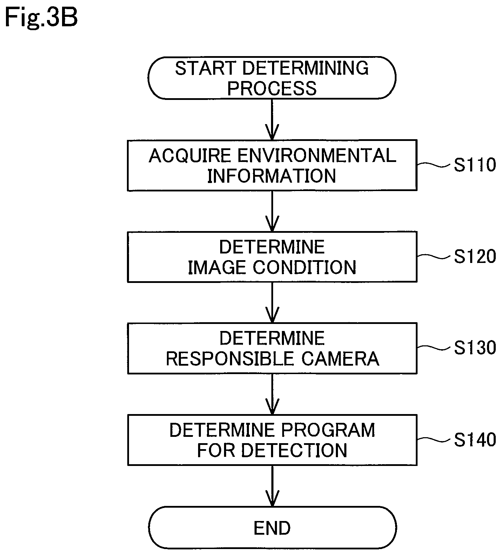

Fig. 3B is a flowchart of the determining process according to the present embodiment. The determining process is a process for implementing a control method according to the present embodiment. The determining process is performed at a predetermined time interval, for example, by the processor 201 of the controller 200.

In S110 in Fig. 3B, the environmental information acquisition unit 220 acquires the environmental information about the vehicle 100 as a subject of control by unmanned driving. In S120, the first determination unit 230 determines the image condition in response to the environmental information acquired in S110. As described above, the part for detection is determined in S120 of the present embodiment. In S130, the second determination unit 240 determines the responsible camera in response to the environmental information acquired in S110. In S140, the third determination unit 245 determines the program for detection in response to the image condition determined in S120. In S140 of the present embodiment, by determining the program for detection in this way, details of the estimating process are determined in response to the image condition. More specifically, in S140, details of the analyzing process are determined.

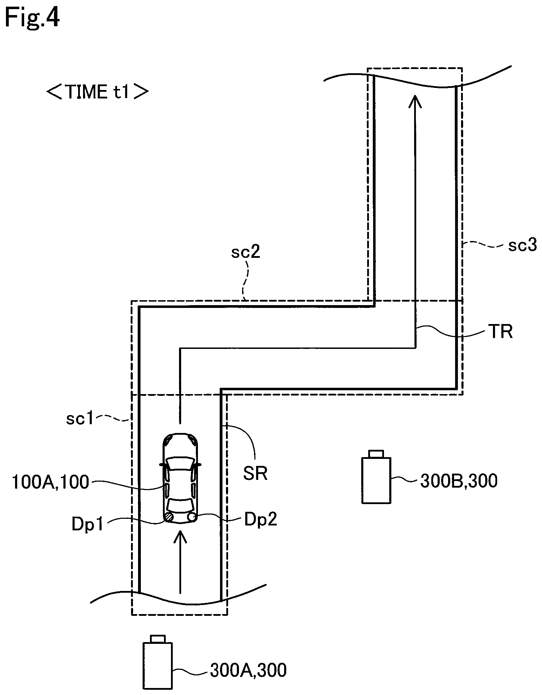

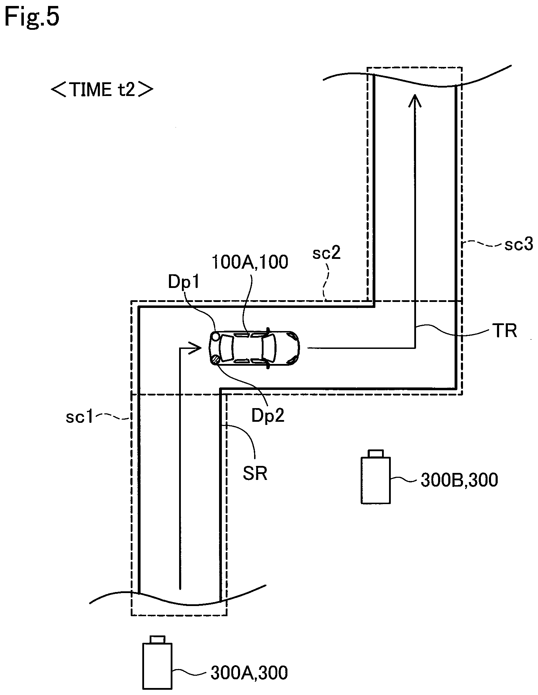

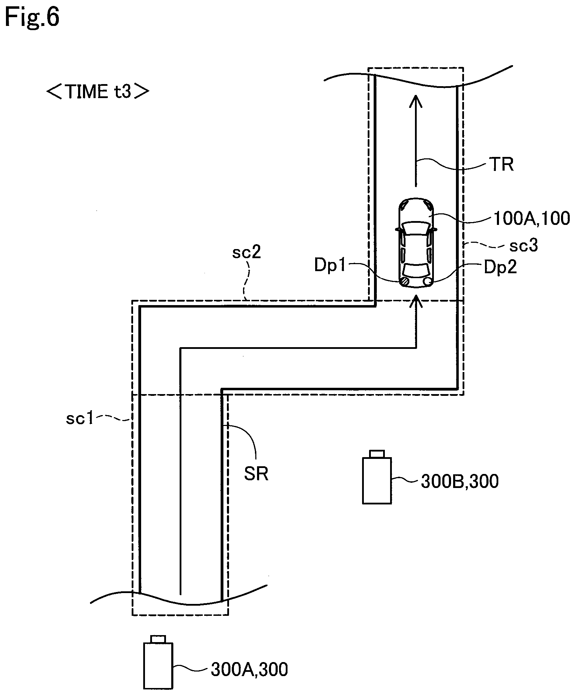

Fig. 4 is a first view explaining the determining process. Fig. 5 is a second view explaining the determining process. Fig. 6 is a third view explaining the determining process. Each of Figs. 4 to 6 shows an example where the vehicle 100 runs on the track SR along the target route TR by remote control. More specifically, Fig. 4 shows a situation where a vehicle 100A runs in a section sc1 at time t1. Fig. 5 shows a situation where the vehicle 100A runs in a section sc2 at time t2 after the time t1. Fig. 6 shows a situation where the vehicle 100A runs in a section sc3 at time t3 after the time t2.

In the illustrations in Figs. 4 to 6, either a first part Dp1 or a second part Dp2 is used alternatively as the detection point. In each of Figs. 4 to 6, one of the parts to be used as the detection point is indicated by a hatched marker and the other part not to be used as the detection point is indicated by a blank marker. In the present embodiment, the first part Dp1 is a left side part of the vehicle 100 on the left side of a center position in a vehicle width direction, and the second part Dp2 is a right side part of the vehicle 100 on the right side of the center position. In particular, the first part Dp1 is a left rear corner of the vehicle 100, and the second part Dp2 is a right rear corner of the vehicle 100. Specifically, the first part Dp1 and the second part Dp2 are parts substantially symmetrical to each other in the vehicle width direction of the vehicle 100. The above-described condition data 271 contains association between the section sc1 and the first part Dp1, association between the section sc2 and the second part Dp2, and association between the section sc3 and the first part Dp1. The first analysis program 281 shown in Fig. 2 is used if the first part Dp1 is used as the detection point. The second analysis program 282 is used if the second part Dp2 is used as the detection point.

In the present embodiment, the camera data 272 contains association between the section sc1 and the camera 300A, association between the section sc2 and the camera 300A and a camera 300B, and association between the section sc3 and the camera 300B. The camera 300A is available for capturing an image of the first part Dp1 in the section sc1 and available for capturing an image of the second part Dp2 in the section sc2. The camera 300B is available for capturing an image of the second part Dp2 in the section sc2 and available for capturing an image of the first part Dp1 in the section sc3. If a certain section is associated with two or more of the cameras 300 like the section sc2, it is preferable that the camera 300 available for capturing an image of the detection point more appropriately be determined as the responsible camera in this section, for example. In this case, the camera 300 having a shorter distance to the vehicle 100 may be determined as the responsible camera, or the responsible camera may be determined so as to allow reduction in a probability that an obstacle other than the vehicle 100 will be seen in the image for detection, for example. In another exemplary case, if it is possible to capture the images for detection using two or more of the cameras 300 in a certain section according to a determination made by the first determination unit 230, only the camera 300 available for capturing an image of the detection point more appropriately may be associated with this section, for example.

In the illustration in Fig. 4, for example, the running place information indicating that a current location of the vehicle 100A is the section sc1 is acquired as the environmental information about the vehicle 100A in S110 in Fig. 3B. Next, in S120, the condition data 271 is referred to in response to the running place information about the vehicle 100A acquired in S110 to determine the part for detection to be the first part Dp1 in association with the section sc1. Then, in S130, the camera data 272 is referred to in response to the environmental information acquired in S110 to determine the camera 300A available for capturing an image of the first part Dp1 as the responsible camera in association with the section sc1. In S140, the first analysis program 281 is determined as the program for detection in association with the first part Dp1.

In the illustration in Fig. 5, the running place information indicating that a running place of the vehicle 100A is the section sc2 is acquired in S110 in Fig. 3B. In S120, using the second part Dp2 as the detection point is determined in association with the section sc2. In S130, the responsible camera is determined in association with the section sc2. In this case, of the camera 300A and the camera 300B, the camera 300 available for acquiring the captured image Pi including the second part Dp2 and having a shorter distance to the vehicle 100 is determined as the responsible camera, for example. In S140, the second analysis program 282 is determined as the program for detection in association with the second part Dp2. Description similar to those given for Figs. 4 and 5 applies to the illustration in Fig. 6.

Unlike in the present embodiment, if the first part Dp1 is further used as the detection point in the section sc2, it may be necessary to locate a camera around the track SR available for capturing an image of the first part Dp1 of the vehicle 100 running in the section sc2, for example, as a result of turning of the vehicle 100 to the right between the section sc1 and the section sc2. In another example, depending on the layout of a ceiling, a beam, or a wall around the track SR, it may be difficult to locate a camera in a manner allowing an image of the first part Dp1 of the vehicle 100 running in the section sc2 to be captured appropriately. In the present embodiment, it is possible to reduce the number of cameras to be used for remote control and to reduce influence on the remote control to be caused by limitation on an installation location of a camera.

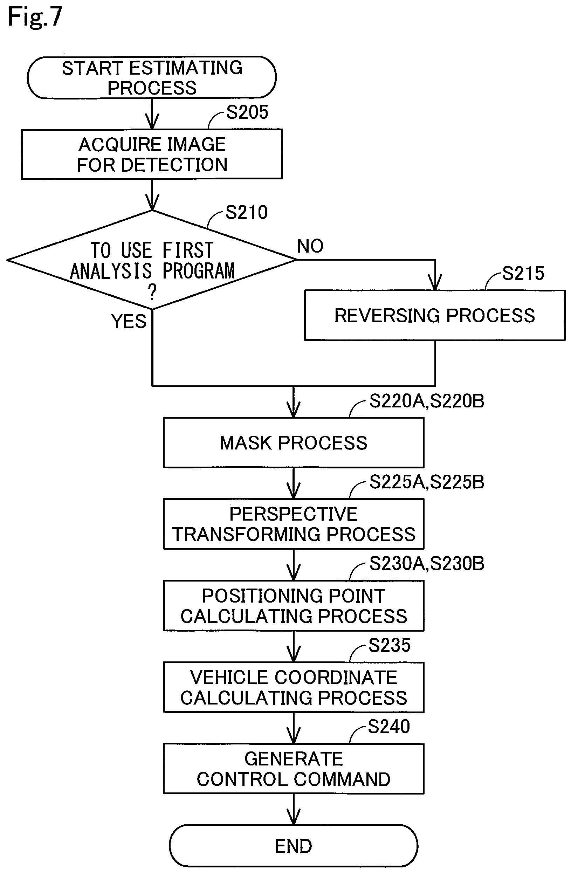

Fig. 7 is a flowchart of the estimating process according to the present embodiment. In the present embodiment, the estimating process is performed each time the image for detection is transmitted from the responsible camera to the controller 200. Fig. 7 includes S210 to S235 performed in S1 in Fig. 3A. Fig. 7 includes S240 performed in S2 and S3 in Fig. 3A.

In S205 in Fig. 7, the image acquisition unit 210 acquires the image for detection transmitted from the responsible camera. In S210 in Fig. 7, on the basis of result in S140 Fig. 3B, the estimation unit 250 judges whether to use the first analysis program 281 in analyzing the image for detection. If it is judged in S210 that the first analysis program 281 is to be used, the analysis unit 251 performs a first process from S220 to S230 realized by the first analysis program 281. If it is not judged in S210 that the first analysis program 281 is to be used, the analysis unit 251 performs a second process in S215 and from S220 to S230 realized by the second analysis program 282. In the following, S220 to be realized by the first analysis program 281 will also be expressed as S220A, and S220 to be realized by the second analysis program 282 will also be expressed as S220B. This also applies to S225 and S230.

Unlike the first process, the second process includes a reversing process in S215. The reversing process is a process of generating a reversed image by mirror-reversing the image for detection. As a result, while a subject of analysis from S220A to S230A is the image for detection without being mirror-reversed, a subject of analysis from S220B to S230B is the reversed image. This process of mirror-reversing the image is also called "flip."

The first process and the second process are substantially the same except that the second process includes the reversing process. Specifically, it is possible to analyze the reversed image from S220B to S230B using a similar algorithm from S220A to S230A, namely, using a similar procedure from S220A to S230A. More specifically, if the first part Dp1 is used as the detection point, the first part Dp1 is detected from S220A to S230A as a left rear corner in the image for detection without being reversed. Meanwhile, if the second part Dp2 is used as the detection point, the second part Dp2 is detected from S220B to S230B apparently as a left rear corner in the reversed image while the second part Dp2 is actually a right rear corner. Specifically, in the present embodiment, the second part Dp2 is detected in the reversed image as a part corresponding to the first part Dp1 in the image for detection without being mirror-reversed.

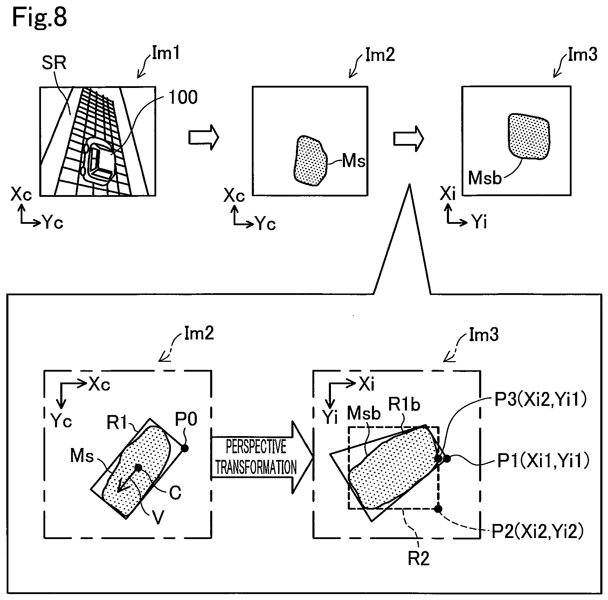

Fig. 8 is an explanatory view of an example showing how an image Im1 is analyzed in the estimating process. The image Im1 shown in Fig. 8 is an image resulting from image capturing of the vehicle 100 running on the track SR in a traveling direction. The image Im1 is expressed in a camera coordinate system with coordinate axes each having an origin defined by a focal point of the camera 300, and including an Xc axis and a Yc axis perpendicular to the Xc axis. The image Im1 may be the reversed image or the image for detection without being mirror-reversed. The image Im1 may be subjected to various types of correction or preparatory processes as appropriate such as a distortion correcting process of correcting distortion in the image Im1, a rotating process of rotating the Im1 in such a manner that the direction of a moving vector V of the vehicle 100 included in the image Im1 is pointed in a predetermined direction, and a trimming process of trimming an unnecessary region not including the vehicle 100 from the image Im1, for example. The size or direction of the moving vector V of the vehicle 100 included in the captured image Pi is detected using an optical flow method, for example.

The analysis unit 251 performs the analyzing process from S220 to S230 in Fig. 7. In the analyzing process of the present embodiment, the analysis unit 251 calculates the coordinate of a positioning point P3 shown in Fig. 8 using the image Im1 to detect the positioning point P3. The coordinate of the positioning point P3 is calculated as the coordinate of the vicinity of the detection point in a local coordinate system described later. The positioning point P3 detected in this way represents the detection point in the image for detection.

In S220, the analysis unit 251 performs a mask process as a detecting process of detecting the vehicle 100 in the image Im1. The mask process is a process of detecting the vehicle 100 in the image Im1 and masking a subject region including the detected vehicle 100 in the image Im1, thereby generating an image Im2 corresponding to the image Im1 and including the masked subject region. In the following, a region masked by the mask process will also be called a mask region Ms. In the mask process, the estimation unit 250 generates the image Im2 by inputting the image Im1 to a machine learning model (not shown in the drawings) subjected to machine learning in advance in such a manner as to mask the vehicle 100 included in an input image, for example. The machine learning model to be used herein is a deep neural network (hereinafter called DNN) having a configuration of a convolution neural network (hereinafter called CNN) to realize semantic segmentation or instance segmentation, for example. The machine learning model is not limited to the above but may be a machine learning model having been learned using an algorithm other than a neural network, for example.

In S225, the analysis unit 251 performs a perspective transforming process. The perspective transforming process is a process of perspective transforming the image Im2, thereby generating an image Im3 corresponding to the perspective transformed image Im2. In the perspective transforming process, using a perspective transformation parameter relating to location information or an internal parameter about the camera 300, for example, the analysis unit 251 perspective transforms the image Im2 to an overhead image taken in a view from above the vehicle 100 (from directly above the vehicle 100, for example) and substantially vertical to a road surface of the track SR. The image Im3 generated as the overhead image in this way is expressed in a local coordinate system different from the camera coordinate system. The local coordinate system is a coordinate system having an origin defined by one point on an image plane projected by the perspective transformation, and coordinate axes including an Xi axis and a Yi axis perpendicular to the Xi axis. The image Im3 includes a mask region Msb corresponding to the mask region Ms transformed by the perspective transformation.

In S230, the analysis unit 251 performs a positioning point calculating process of calculating the coordinate of the positioning point P3. In the positioning point calculating process of the present embodiment, the analysis unit 251 calculates the coordinate of the positioning point P3 using coordinates (Xi1, Yi1) of a first coordinate point P1 and coordinates (Xi2, Yi2) of a second coordinate point P2.

The first coordinate point P1 is identified as a coordinate point indicating one of the vertexes of a quadrilateral R1b in the image Im3 and corresponding to a base coordinate point P0 in the image Im2. The quadrilateral R1b corresponds to a first circumscribed rectangle R1 after being transformed by the perspective transformation. The first circumscribed rectangle R1 is a rectangle circumscribed around the mask region Ms and having long sides parallel to the moving vector V of the vehicle 100 in the image Im2. The base coordinate point P0 is a coordinate point indicating one of the vertexes of the first circumscribed rectangle R1, which is a vertex corresponding to the detection point of the vehicle 100. More specifically, the base coordinate point P0 is a coordinate point indicating the vertex of the first circumscribed rectangle R1, which is the vertex located on the left side and on the rear side of a barycenter C of the vehicle 100 on the assumption that the direction of the moving vector V is pointed forward.

The second coordinate point P2 is a coordinate point indicating one of the four vertexes of a second circumscribed rectangle R2 in the image Im3, which is a vertex corresponding to the detection point of the vehicle 100. More specifically, the second coordinate point P2 is at a coordinate indicating the vertex of the second circumscribed rectangle R2, which is the vertex located on the left side and on the rear side of the barycenter C of the vehicle 100 on the assumption that the direction of the moving vector V is pointed forward. The second circumscribed rectangle R2 is a rectangle circumscribed around the mask region Msb, and having a side parallel to the Xi axis and a side parallel to the Yi axis. As both the first coordinate point P1 and the second coordinate point P2 are coordinate points determined in response to the detection point in this way, they have a correlation with each other.

If the coordinate value Xi1 of the first coordinate point P1 is larger than the coordinate value Xi2 of the second coordinate point P2, the estimation unit 250 determines the Xi coordinate of the positioning point P3 to be the coordinate value Xi2. Conversely, if the coordinate value Xi1 is smaller than the coordinate value Xi2, the estimation unit 250 determines the Xi coordinate of the positioning point P3 to be the coordinate value Xi1. Furthermore, if the coordinate value Yi1 of the first coordinate point P1 is larger than the coordinate value Yi2 of the second coordinate point P2, the estimation unit 250 determines the Yi coordinate of the positioning point P3 to be the coordinate value Yi1. Conversely, if the coordinate value Yi1 is smaller than the coordinate value Yi2, the estimation unit 250 determines the Yi coordinate of the positioning point P3 to be the coordinate value Yi2. By setting the Xi coordinate and the Yi coordinate of the positioning point P3 in this way, the positioning point P3 is detected.

In S235, the estimation unit 250 performs a vehicle coordinate calculating process. The vehicle coordinate calculating process is a process of calculating a vehicle coordinate point using the positioning point P3. The vehicle coordinate point is a coordinate point indicating the positioning point P3 in the reference coordinate system RC. In S235, the estimation unit 250 calculates the vehicle coordinate point using a predetermined estimation formula and the coordinate value of the positioning point P3 calculated in S230, for example. The vehicle coordinate point calculated in this way corresponds to the "location" included in the vehicle location information described above. A technique of estimating the location of the vehicle 100 using the detection point is not limited to the above. For example, the vehicle 100 may be detected in the image for detection by a process different from the mask process, the detection point may be detected in the image for detection by a process different from the perspective transforming process or the positioning point calculating process, or the vehicle coordinate point may be calculated by a process different from the vehicle coordinate calculating process.

In S240, the command generation unit 260 generates a control command using the vehicle coordinate point calculated by the estimating process. The control command generated in this way is transmitted to the vehicle 100.

In the system 10 of the present embodiment described above, the first determination unit 230 determines at least one of the part for detection and the image capturing direction of capturing the image for detection in response to the environmental information about the vehicle 100. By doing so, it becomes possible to determine the part for detection or the image capturing direction of capturing the image for detection in response to the environment related to running of the vehicle 100. This allows the image for detection suitable for remote control over the vehicle 100 to be acquired with higher possibility.

In the present embodiment, the environmental information includes the running place information about the vehicle 100. This makes it possible to determine the part for detection or the image capturing direction of capturing the image for detection in response to a place where the vehicle 100 runs by remote control.

In the present embodiment, in response to the environmental information, the second determination unit 240 determines the camera 300 of the plurality of cameras 300 as the responsible camera available for capturing the image for detection in such a manner as to fulfill the determined image condition. This makes it possible to determine the responsible camera appropriately in response to the environmental information.

In the present embodiment, the first determination unit 230 determines the part for detection to be the left side part or the right side part of the vehicle 100 alternatively in response to the environmental information. This makes it possible to use the left side part or the right side part of the vehicle 100 as the detection point in response to the environmental information. Thus, by installing the camera 300 along a left side or a right side of the track SR, it becomes possible to easily capture the image for detection including the detection point using the camera 300. In particular, in the present embodiment, the first determination unit 230 determines the part for detection to be the left rear corner or the right rear corner of the vehicle 100 alternatively in response to the environmental information. Thus, by capturing an image of the vehicle 100 from the rear side of the vehicle 100 using the camera 300 installed along the left side or the right side of the track SR, it becomes possible to easily capture the image for detection including the part for detection. By doing so, it becomes possible to detect the detection point with high accuracy using a circumscribed rectangle during the analyzing process.

In the present embodiment, the third determination unit 245 changes details of the estimating process in response to the determined image condition. Thus, it is possible to change the details of the estimating process in response to the determined image condition. This allows the location of the vehicle 100 to be estimated with higher accuracy and with higher possibility during the estimating process.

In the present embodiment, the third determination unit 245 determines to perform the second process in the estimating process if the second part Dp2 is used as the detection point, and determines to perform the first process in the estimating process if the first part Dp1 is used as the detection point. The first process is a process of detecting the first part Dp1 in the image for detection without being mirror-reversed. The second process is a process of detecting the second part Dp2 in the reversed image. Thus, it is possible to detect the first part Dp1 and the second part Dp2 by following the procedure common between the case where the first part Dp1 is used as the detection point and the case where the second part Dp2 is used as the detection point except for the mirror reversing of the image for detection.

In the present embodiment, the third determination unit 245 determines a program to be used in the estimating process in response to the determined image condition, thereby determining details of the estimating process. By causing the third determination unit 245 to determine the program, it becomes possible to change the details of the estimating process in response to the determined image condition.

### B. Second Embodiment

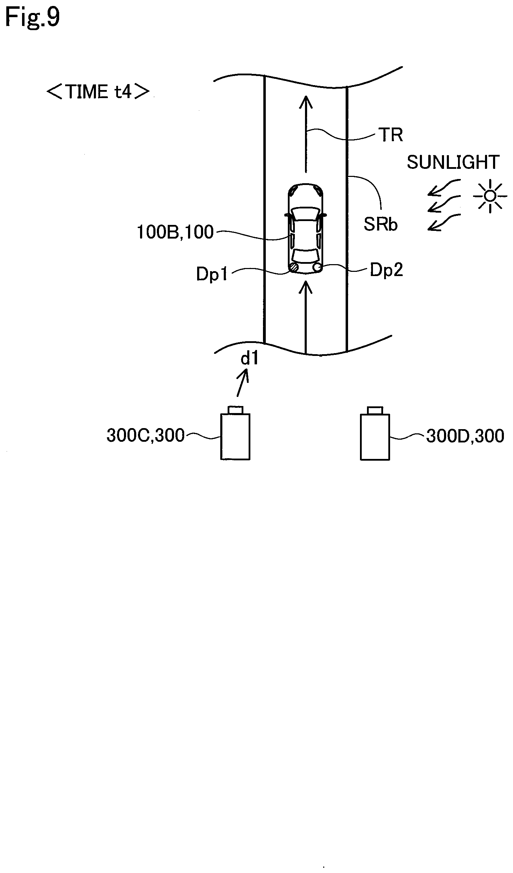

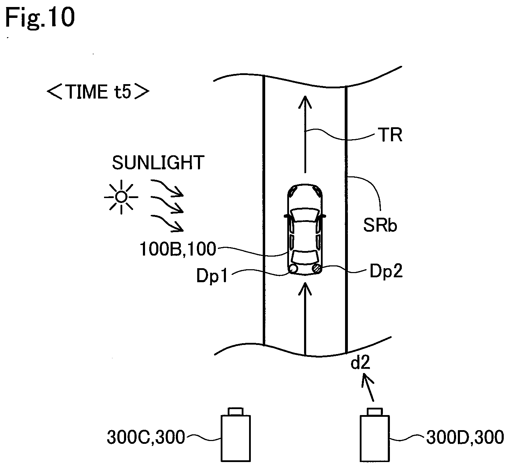

Fig. 9 is a first view explaining a determining process according to a second embodiment. Fig. 10 is a second view explaining the determining process according to the second embodiment. Substantially similar to each of Figs. 4 to 6, each of Figs. 9 and 10 shows an example where a vehicle 100 runs on a track SRb along the target route TR by remote control. Unlike in the first embodiment, in the present embodiment, the environmental information includes running timing information indicating timing of running of the vehicle 100. Unlike in the first embodiment, in the present embodiment, the first determination unit 230 determines an image capturing direction of capturing the image for detection. Part of the configuration of a system 10 of the second embodiment not to be described particularly is the same as that of the first embodiment.

Fig. 9 shows a situation where a vehicle 100B runs on the track SRb at time t4. Fig. 10 shows a situation where the vehicle 100B runs on the track SRb at time t5 different from the time t4. The time t4 is time when sunlight might fall on the vehicle 100 running on the track SRb from the right side of the vehicle 100 on sunny days. Thus, if an image of the vehicle 100 is captured from the right side of the vehicle 100 at the time t4, it is impossible in some cases to obtain an appropriate image for detection due to influence by sunlight falling on the right side part of the vehicle 100. The time t5 is time when sunlight might fall on the vehicle 100 running on the track SRb from the left side of the vehicle 100 on sunny days. Thus, if an image of the vehicle 100 is captured from the left side of the vehicle 100 at the time t5, it is impossible in some cases to obtain an appropriate image for detection due to influence by sunlight falling on the left side part of the vehicle 100. In this way, timing of running of the vehicle 100 might become influential on the image for detection.

The running timing information of the present embodiment is information indicating current time. In other embodiments, the running timing information may be information indicating a rough time period when the vehicle 100 runs by remote control, for example. The condition data 271 of the present embodiment is data containing association between a time period and an image capturing direction of capturing the image for detection. The camera data 272 of the present embodiment is data containing association between the time period and each camera 300.

In the present embodiment, the condition data 271 contains association between a time period including the time t4 and not including the time t5 and a first image capturing direction d1, and association between a time period including the time t5 and not including the time t4 and a second image capturing direction d2. The first image capturing direction d1 is an image capturing direction of capturing an image of the vehicle 100 from a left rear side. The second image capturing direction d2 is an image capturing direction of capturing an image of the vehicle 100 from a right rear side. In the present embodiment, the camera data 272 contains association between the time period including the time t4 and not including the time t5 and a camera 300C, and association between the time period including the time t5 and not including the time t4 and a camera 300D. The camera 300C is located in a manner allowing image capturing of the vehicle 100 from the left rear side. The camera 300D is located in a manner allowing image capturing of the vehicle 100 from the right rear side. Furthermore, in the present embodiment, the first analysis program 281 is used if the image capturing direction is the first image capturing direction d1. The second analysis program 282 is used if the image capturing direction is the second image capturing direction d2.

Referring to the illustration in Fig. 9, the running timing information indicating that current time is the time t4 is acquired as the environmental information about the vehicle 100B in S110 in Fig. 3B. In S120, the condition data 271 is referred to in response to the running timing information about the vehicle 100B acquired in S110 to determine the image capturing direction to be the first image capturing direction d1 in association with the time t4. In S130, the camera data 272 is referred to in response to the environmental information acquired in S110 to determine the camera 300C as a responsible camera in association with the time t4 available for capturing an image of the vehicle 100B from the first image capturing direction d1. Description similar to that given for Fig. 9 applies to the illustration in Fig. 10.

In the above-described second embodiment, the environmental information includes the running timing information about the vehicle 100. Thus, it is possible to determine the part for detection or the image capturing direction of capturing the image for detection in response to timing of running of the vehicle 100 by remote control. Regarding the illustrations in Figs. 9 and 10 described above, for example, it is possible to acquire the image for detection by capturing an image of the vehicle 100 from the left side at the time t4 when sunlight might fall on the vehicle 100 from the right side of the vehicle 100. Furthermore, it is possible to acquire the image for detection by capturing an image of the vehicle 100 from the right side at the time t5 when sunlight might fall on the vehicle 100 from the left side of the vehicle 100. By doing so, it becomes possible to reduce the occurrence of influence on the image for detection by sunlight. As a result, it is also possible in the present embodiment to acquire the image for detection suitable for remote control over the vehicle 100 with higher possibility.

In other embodiments, the environmental information may include both the running timing information and the running place information. In this case, for determining the part for detection or the image capturing direction, the first determination unit 230 may use the condition data 271 containing association of the running timing information and the running place information with a part of the vehicle 100 that might be available as the part for detection or with the image capturing direction. In this case, the condition data 271 may be data containing association for each time period between a section where the vehicle 100 runs and the part for detection or the image capturing direction in this section, for example.

### C. Third Embodiment

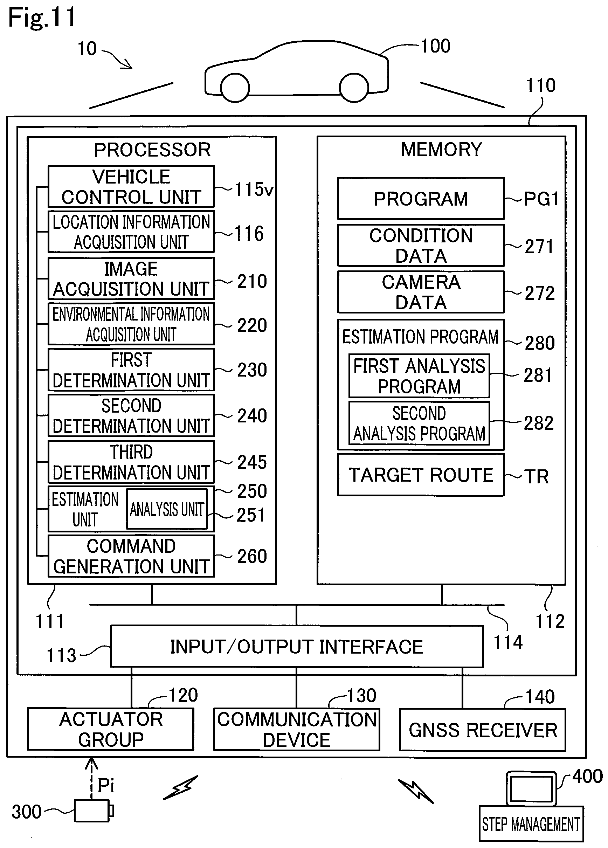

Fig. 11 is a block diagram showing the configuration of a system 10 according to a third embodiment. Unlike that of the first embodiment, the system 10 of the present embodiment does not include the controller 200. A vehicle of the present embodiment is capable of running by autonomous control by the vehicle. The vehicle of the present embodiment has a device configuration same as that of the first embodiment. Thus, for the sake of convenience, the vehicle of the present embodiment will be called a vehicle 100. Part of the configuration of the system 10 and part of the configuration of the vehicle 100 of the third embodiment not to be described particularly are the same as those of the configurations of the first embodiment.

In the present embodiment, the vehicle 100 includes a communication device 130 capable of communicating with a camera 300 as an external sensor and with a step management device 400. A vehicle controller 110 includes a processor 111 that executes a program PG1 stored in a memory 112 to function as a vehicle control unit 115v, a location information acquisition unit 116, an image acquisition unit 210, an environmental information acquisition unit 220, a first determination unit 230, a second determination unit 240, a third determination unit 245, an estimation unit 250, and a command generation unit 260. The vehicle control unit 115v controls an actuator group 120 using a running control signal generated by the vehicle 100, thereby allowing the vehicle 100 to run by autonomous control. The memory 112 stores condition data 271, camera data 272, an estimation program 280, a target route TR, and a detection model (not shown in the drawings) in addition to the program PG1. The vehicle controller 110 of the third embodiment corresponds to a "controller" of the present disclosure.

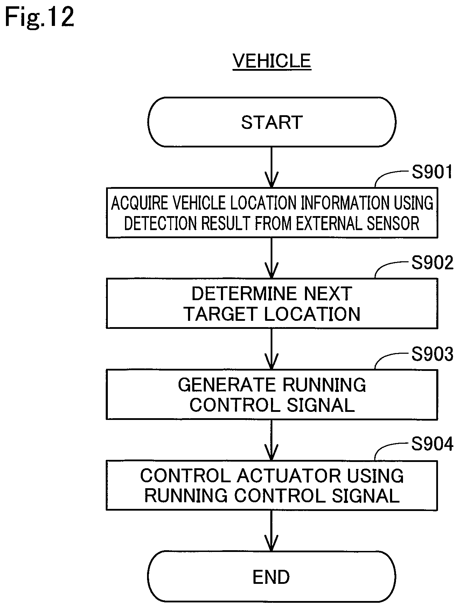

FIG. 12 is a flowchart showing a processing procedure for running control of the vehicle 100 in the third embodiment. Since the configuration of the vehicle in the present embodiment is the same as in the first embodiment, the vehicle in the present embodiment is denoted as vehicle 100 for convenience. In step S901, the vehicle 100 acquires vehicle location information using detection result output from the camera as an external sensor. In step S902, the vehicle 100 determines a target location to which the vehicle 100 is to move next. In step S903, the vehicle 100 generates a running control signal for causing the vehicle 100 to run to the determined target location. In step S904, the vehicle 100 controls an actuator using the generated running control signal, thereby causing the vehicle 100 to run by following a parameter indicated by the running control signal. The vehicle 100 repeats the acquisition of vehicle location information, the determination of a target location, the generation of a running control signal, and the control over the actuator in a predetermined cycle. According to the running control in the present embodiment, it is possible to cause the vehicle 100 to run by autonomous control without controlling the vehicle 100 remotely using the server 200.

### D. Other Embodiments

(D1) In each of the above-described embodiments, the first determination unit 230 may determine both the part for detection and the image capturing direction of capturing the image for detection.

(D2) In each of the above-described embodiments, the environmental information may include various types of information indicating the environment related to running of the vehicle 100 instead of or in addition to the running timing information or the running place information. For example, the environmental information may include weather information indicating weather in an area including the track SR. In this case, in determining the part for detection or the image capturing direction, the first determination unit 230 may use the condition data 271 containing association of weather with a part of the vehicle 100 that might be available as the part for detection or with the image capturing direction. In this case, it is possible for the first determination unit 230 to make a difference in the part for detection, the image capturing direction, or the responsible camera between sunny days and rainy days, for example, by referring to the condition data 271 in response to the weather information. If the environmental information includes the running place information and the weather information, it is possible to determine the part for detection, the image capturing direction, or the responsible camera by considering a probability of the occurrence of a puddle in each section in the track SR on rainy days, for example. By doing so, it is possible to suppress reduction in accuracy of estimating the location of the vehicle 100 due to an image of the vehicle 100 reflected on a puddle included in the image for detection, for example. The environmental information may be information acquired by a sensor mounted on the vehicle 100 as a subject of remote control or each type of sensor installed around the track SR, and indicating the presence or absence of an obstacle around the vehicle 100 or an environmental temperature or an environmental humidity in a place where the vehicle 100 runs, for example.

(D3) In each of the above-described embodiments, the responsible camera is determined from the plurality of cameras 300 in response to the environmental information. Meanwhile, the responsible camera may not have to be determined in this way. For example, the camera 300 may be configured to be changeable in the angle or location thereof, and the angle or location of one camera 300 may be changed in response to the environmental information so as to allow image capturing of the determined part for detection or allow image capturing of the vehicle 100 in the determined image capturing direction. In this case, only one camera 300 may be provided in the system 10. In this case, the second determination unit 240 is omissible from the system 10.

(D4) In each of the above-described embodiments, the first part Dp1 may be a right side part of the vehicle 100 and the second part Dp2 may be a left side part of the vehicle 100, for example. In examples not according to the invention, the detection point to be used may not have to be a pair of parts symmetrical to each other in a vehicle width direction such as the first part Dp1 and the second part Dp2. For example, a left rear corner and a right front corner of the vehicle 100 may be used as the detection point. Furthermore, the detection point to be used may not have to be the left side part or the right side part of the vehicle 100 but may be a part of the vehicle 100 different from the left side part and the right side part. In another case, three or more parts may be used as the detection point. If the part for detection is not determined by the first determination unit 230, only one part may be used as the detection point.

(D5) In each of the above-described embodiments, the third determination unit 245 may not have to determine a program to be used in the estimating process in response to the determined image condition. In this case, the program to be used in the estimating process may be determined in response to an environmental condition, for example. As another example, even in the presence of different image conditions, the same program may be used in the estimating process. In this case, the estimation unit 250 or the analysis unit 251 may change details of the estimating process or those of the analyzing process by changing a parameter to be used in the estimating process of the analyzing process in response to the image condition. Furthermore, the third determination unit 245 may not have to determine details of the estimating process in response to the image condition. In this case, the estimation unit 250 may estimate the location of the vehicle 100 by inputting the image for detection to one machine learning model without depending on the image condition, for example. Also in this case, the third determination unit 245 is omissible from the system 10.

(D6) In each of the above-described embodiments, the third determination unit 245 determines to perform the second process in the estimating process if the second part Dp2 is used as the detection point. Meanwhile, in this case, the third determination unit 245 may not have to determine to perform the second process. In this case, the analysis unit 251 may detect the second part Dp2 by detecting the second part Dp2 actually in the image for detection without being mirror-reversed, for example.

(D7) In each of the above-described embodiments, the vehicle 100 is simply required to have a configuration to become movable by unmanned driving. The vehicle 100 may embodied as a platform having the following configuration, for example. The vehicle 100 is simply required to include at least actuators and a controller. More specifically, in order to fulfill three functions including "run," "turn," and "stop" by unmanned driving, the actuators may include a driving device, a steering device and a braking device. The actuators are controlled by the controller that controls running of the vehicle 100. In order for the vehicle 100 to acquire information from outside for unmanned driving, the vehicle 100 is simply required to include the communication device further. Specifically, the vehicle 100 to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100 before the vehicle 100 is shipped from a factory, or a remaining component such as a bodyshell may be mounted on the vehicle 100 after the vehicle 100 is shipped from a factory while the remaining component such as a bodyshell is not mounted on the vehicle 100. Each of components may be mounted on the vehicle 100 from any direction such as from above, from below, from the front, from the back, from the right, or from the left. Alternatively, these components may be mounted from the same direction or from respective different directions. The location determination for the platform may be performed in the same way as for the vehicle 100 in the first embodiments.

(D8) In each of the above-described embodiments, in the system 10, various types of functional units including the image acquisition unit 210, the environmental information acquisition unit 220, the first determination unit 230, the second determination unit 240, the third determination unit 245, the estimation unit 250, and the command generation unit 260 may be provided at the vehicle 100. In this case, as described in the third embodiment, all of the image acquisition unit 210, the environmental information acquisition unit 220, the first determination unit 230, the second determination unit 240, the third determination unit 245, the estimation unit 250, and the command generation unit 260 may be provided at the vehicle 100 or some of these functional units may be provided at the vehicle 100. In the system 10, some or all of these functional units may be provided at a device external to the server 200 and the vehicle 100.

(D9) In each of the above-described embodiments, the system 10 is configured as a system including the camera 300, the estimation unit 250, and the command generation unit 260. Meanwhile, the system 10 may not have to be configured in this way. For example, the system 10 may be configured as a system that determines at least one of the part for detection and the image capturing direction of capturing the image for detection in response to the environmental information, and transmits result of the determination to another system including the camera 300, the estimation unit 250, or the command generation unit 260. In this case, the system 10 may not have to include some or all of the camera 300, the estimation unit 250, and the command generation unit 260, for example.

(D10) In the above-described first embodiment, the server 200 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.
(1) The server 200 may acquire vehicle location information, determine a target location to which the vehicle 100 is to move next, and generate a route from a current location of the vehicle 100 indicated by the acquired vehicle location information to the target location. The server 200 may generate a route to the target location between the current location and a destination or generate a route to the destination. The server 200 may transmit the generated route to the vehicle 100. The vehicle 100 may generate a running control signal in such a manner as to cause the vehicle 100 to run along the route received from the server 200 and control an actuator using the generated running control signal.
(2) The server 200 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control an actuator using the generated running control signal.
(3) In the foregoing embodiments (1) and (2), an internal sensor may be mounted on the vehicle 100, and detection result output from the internal sensor may be used in at least one of the generation of the route and the generation of the running control signal. The internal sensor is a sensor mounted on the vehicle 100. More specifically, the internal sensor might include a camera, LiDAR, a millimeter wave radar, an ultrasonic wave sensor, a GPS sensor, an acceleration sensor, and a gyroscopic sensor, for example. For example, in the foregoing embodiment (1), the server 200 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

(D11) In the above-described embodiment in which the vehicle 100 can be running by autonomous control, the vehicle 100 may be equipped with an internal sensor, and detection result output from the internal sensor may be used in at least one of generation of a route and generation of a running control signal. For example, the vehicle 100 may acquire detection result from the internal sensor, and in generating the route, may reflect the detection result from the internal sensor in the route. The vehicle 100 may acquire detection result from the internal sensor, and in generating the running control signal, may reflect the detection result from the internal sensor in the running control signal.

(D12) In the above-described embodiment in which the vehicle 100 can be running by autonomous control, the vehicle 100 acquires vehicle location information using detection result from the external sensor. By contrast, the vehicle 100 may be equipped with an internal sensor, the vehicle 100 may acquire vehicle location information using detection result from the internal sensor, determine a target location to which the vehicle 100 is to move next, generate a route from a current location of the vehicle 100 indicated by the acquired vehicle location information to the target location, generate a running control signal for running along the generated route, and control an actuator of the vehicle 100 using the generated running control signal. In this case, the vehicle 100 is capable of running without using any detection result from an external sensor. The vehicle 100 may acquire target arrival time or traffic congestion information from outside the vehicle 100 and reflect the target arrival time or traffic congestion information in at least one of the route and the running control signal.

(D13) In the above-described first embodiment, the server 200 automatically generates a running control signal to be transmitted to the vehicle 100. By contrast, the server 200 may generate a running control signal to be transmitted to the vehicle 100 in response to operation by an external operator existing outside the vehicle 100. For example, the external operator may operate an operating device including a display on which a captured image output from the external sensor is displayed, steering, an accelerator pedal, and a brake pedal for operating the vehicle 100 remotely, and a communication device for making communication with the server 200 through wire communication or wireless communication, for example, and the server 200 may generate a running control signal responsive to the operation on the operating device.

(D14) The vehicle 100 may be manufactured by combining a plurality of modules. The module means a unit composed of one or more components grouped according to a configuration or function of the vehicle 100. For example, a platform of the vehicle 100 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100 different from the platform may be modularized. Various modules may include an arbitrary exterior component such as a bumper or a grill, or an arbitrary interior component such as a seat or a console. Not only the vehicle 100 but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(D15) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

## Claims

1. A system (10) comprising:
a moving object configured to move by unmanned driving using a predetermined detection point included in an image for detection resulting from image capturing of the moving object;
an image acquisition unit (210) configured to acquire the image for detection; and
an environmental information acquisition unit (220) configured to acquire environmental information indicating an environment in which the moving object moves by the unmanned driving, wherein the environmental information includes at least one of information indicating timing of moving of the moving object by the unmanned driving and information indicating a place where the moving object moves by the unmanned driving,
**characterised by** further comprising
a first determination unit (230) configured to determine at least a part of the moving object to be used as the detection point in response to the acquired environmental information, wherein the first determination unit is configured to determine the part to be a left side part or a right side part of the moving object alternatively in response to the environmental information.

2. The system (10) according to claim 1, further comprising:
a plurality of cameras (300) for image capturing of the moving object; and
a second determination unit (240) configured to determine the camera (300) of the plurality of cameras (300) as a responsible camera (300) to capture the image for detection in response to the environmental information, the determined camera (300) being available for capturing the image for detection in such a manner as to fulfill a condition relating to the at least one of the determined part and the determined image capturing direction, wherein
the image acquisition unit (210) acquires the image for detection from the responsible camera (300).

3. The system (10) according to claim 1, wherein
the first determination unit (230) is further configured to determine the part to be a left rear corner or a right rear corner of the moving object alternatively in response to the environmental information.

4. The system (10) according to any one of claims 1 to 3, further comprising:
a third determination unit (245) that is configured to determine details of an estimating process in response to the at least one of the determined part and the determined image capturing direction, the estimating process being a process of estimating a location of the moving object to be used for generating a control command for the unmanned driving using the detection point in the image for detection.

5. The system (10) according to claim 4, wherein
the moving object is a vehicle (100),
the first determination unit (230) is further configured to determine at least the part to be used as the detection point,
the first determination unit (230) is further configured to determine the part to be a first part (Dp1) or a second part (Dp2) of the vehicle alternatively symmetrical to each other in a width direction of the vehicle in response to the environmental information, wherein the first part (Dp1) is a left rear corner of the vehicle and the second part (Dp2) is a right rear corner of the vehicle,
if the second part (Dp2) is used as the detection point, the third determination unit (245) is further configured to determine to perform a process in the estimating process, the determined process being a process of generating a reversed image by mirror-reversing the image for detection and detecting the second part (Dp2) in the reversed image, and
if the first part (Dp1) is used as the detection point, the third determination unit (245) is further configured to determine to perform a process in the estimating process, the determined process being a process of detecting the first part (Dp1) in the image for detection without being mirror-reversed.

6. The system (10) according to claim 4, wherein
third determination unit (245) is further configured to determine the details of the estimating process by determining a program to be used in the estimating process in response to the at least one of the determined part and the determined image capturing direction.

7. A controller (200) comprising:
an image acquisition unit (210) that is configured to acquire an image for detection resulting from image capturing of a moving object, the image for detection including a predetermined detection point used for unmanned driving of the moving object,
**characterised by** further comprising:
an environmental information acquisition unit (220) that is configured to acquire environmental information indicating an environment in which the moving object moves by the unmanned driving, wherein the environmental information includes at least one of information indicating timing of moving of the moving object by the unmanned driving and information indicating a place where the moving object moves by the unmanned driving; and
a first determination unit (230) that is configured to determine a part of the moving object to be used as the detection point in response to the acquired environmental information, wherein the first determination unit is configured to determine the part to be a left side part or a right side part of the moving object alternatively in response to the environmental information.

8. A control method comprising:
a step of acquiring an image for detection resulting from image capturing of a moving object, the image for detection including a predetermined detection point used for unmanned driving of the moving object,
**characterised by** further comprising:
a step of acquiring environmental information indicating an environment in which the moving object moves by the unmanned driving, wherein the environmental information includes at least one of information indicating timing of moving of the moving object by the unmanned driving and information indicating a place where the moving object moves by the unmanned driving; and
a step of determining at least one of a part of the moving object to be used as the detection point in response to the acquired environmental information, wherein the part is determined to be a left side part or a right side part of the moving object alternatively in response to the environmental information.

## Patentansprüche

1. System (10), das umfasst:
ein sich bewegendes Objekt, das dazu konfiguriert ist, sich durch unbemanntes Fahren unter Verwendung eines vorbestimmten Erkennungspunkts zu bewegen, der in einem Bild für die Erkennung beinhaltet ist, das aus der Bildaufnahme des sich bewegenden Objekts resultiert;
eine Bilderfassungseinheit (210), die dazu konfiguriert ist, das Bild für die Erkennung zu erfassen; und
eine Umgebungsinformationserfassungseinheit (220), die dazu konfiguriert ist, Umgebungsinformationen zu erfassen, die eine Umgebung angeben, in der sich das sich bewegende Objekt durch das unbemannte Fahren bewegt, wobei die Umgebungsinformationen wenigstens eines von Informationen, die den Zeitpunkt der Bewegung des sich bewegenden Objekts durch das unbemannte Fahren angeben, und Informationen beinhalten, die einen Ort angeben, an dem sich das sich bewegende Objekt durch das unbemannte Fahren bewegt,
**gekennzeichnet durch** das weitere Umfassen von:
einer ersten Bestimmungseinheit (230), die dazu konfiguriert ist, wenigstens einen Teil des sich bewegenden Objekts, der als der Erkennungspunkt verwendet werden soll, als Reaktion auf die erfassten Umgebungsinformationen zu bestimmen, wobei die erste Bestimmungseinheit dazu konfiguriert ist, alternativ als Reaktion auf die Umgebungsinformationen den Teil als einen linken Teil oder einen rechten Teil des sich bewegenden Objekts zu bestimmen.

2. System (10) nach Anspruch 1, das ferner umfasst:
eine Mehrzahl von Kameras (300) für die Bildaufnahme des sich bewegenden Objekts; und
eine zweite Bestimmungseinheit (240), die dazu konfiguriert ist, die Kamera (300) der Mehrzahl von Kameras (300) als eine zum Aufnehmen des Bilds für die Erkennung verantwortliche Kamera (300) als Reaktion auf die Umgebungsinformationen zu bestimmen, wobei die bestimmte Kamera (300) zum Aufnehmen des Bildes für die Erkennung auf eine solche Weise verfügbar ist, um eine Bedingung zu erfüllen, die sich auf wenigstens eines des bestimmten Teils und der bestimmten Bildaufnahmerichtung bezieht, wobei
die Bilderfassungseinheit (210) das Bild für die Erkennung von der verantwortlichen Kamera (300) erfasst.

3. System (10) nach Anspruch 1, wobei
die erste Bestimmungseinheit (230) ferner dazu konfiguriert ist, den Teil als eine linke hintere Ecke oder eine rechte hintere Ecke des sich bewegenden Objekts alternativ als Reaktion auf die Umgebungsinformationen zu bestimmen.

4. System (10) nach einem der Ansprüche 1 bis 3, das ferner umfasst:
eine dritte Bestimmungseinheit (245), die dazu konfiguriert ist, Einzelheiten eines Schätzvorgangs als Reaktion auf den wenigstens einen des bestimmten Teils und der bestimmten Bilderfassungsrichtung zu bestimmen, wobei der Schätzvorgang ein Vorgang zum Schätzen eines Standorts des sich bewegenden Objekts ist, der für das Erzeugen eines Steuerbefehls für das unbemannte Fahren unter Verwendung des Erkennungspunkts in dem Bild für die Erkennung verwendet werden soll.

5. System (10) nach Anspruch 4, wobei
das sich bewegende Objekt ein Fahrzeug (100) ist,
die erste Bestimmungseinheit (230) ferner dazu konfiguriert ist, wenigstens den Teil zu bestimmen, der als der Erkennungspunkt verwendet werden soll,
die erste Bestimmungseinheit (230) ferner dazu konfiguriert ist, den Teil alternativ als einen ersten Teil (Dp1) oder einen zweiten Teil (Dp2) des Fahrzeugs, die in einer Breitenrichtung des Fahrzeugs zueinander symmetrisch sind, als Reaktion auf die Umgebungsinformationen zu bestimmen, wobei der erste Teil (Dp1) eine linke hintere Ecke des Fahrzeugs ist und der zweite Teil (Dp2) eine rechte hintere Ecke des Fahrzeugs ist,
wenn der zweite Teil (Dp2) als der Erkennungspunkt verwendet wird, die dritte Bestimmungseinheit (245) ferner dazu konfiguriert ist, zu bestimmen, einen Vorgang in dem Schätzvorgang durchzuführen, wobei der bestimmte Vorgang ein Vorgang des Erzeugens eines umgekehrten Bilds ist, indem das Bild für die Erkennung spiegelbildlich umgekehrt wird und der zweite Teil (Dp2) in dem umgekehrten Bild erkannt wird, und
wenn der erste Teil (Dp1) als der Erkennungspunkt verwendet wird, die dritte Bestimmungseinheit (245) ferner dazu konfiguriert ist, zu bestimmen, einen Vorgang in dem Schätzvorgang durchzuführen, wobei der bestimmte Vorgang ein Vorgang zum Erkennen des ersten Teils (Dp1) in dem Bild für die Erkennung ohne spiegelbildliche Umkehrung ist.

6. System (10) nach Anspruch 4, wobei
die dritte Bestimmungseinheit (245) ferner dazu konfiguriert ist, die Einzelheiten des Schätzvorgangs zu bestimmen, indem als Reaktion auf den wenigstens einen des bestimmten Teils und der bestimmten Bilderfassungsrichtung ein in dem Schätzvorgang zu verwendendes Programm bestimmt wird.

7. Steuervorrichtung (200), die umfasst:
eine Bilderfassungseinheit (210), die dazu konfiguriert ist, ein Bild für die Erkennung zu erfassen, das aus der Bildaufnahme eines sich bewegenden Objekts resultiert, wobei das Bild für die Erkennung einen vorbestimmten Erkennungspunkt beinhaltet, der für das unbemannte Fahren des sich bewegenden Objekts verwendet wird,
**gekennzeichnet durch** das weitere Umfassen von:
einer Umgebungsinformationserfassungseinheit (220), die dazu konfiguriert ist, Umgebungsinformationen zu erfassen, die eine Umgebung angeben, in der sich das sich bewegende Objekt durch das unbemannte Fahren bewegt, wobei die Umgebungsinformationen wenigstens eines von Informationen, die den Zeitpunkt der Bewegung des sich bewegenden Objekts durch das unbemannte Fahren angeben, und Informationen beinhalten, die einen Ort angeben, an dem sich das sich bewegende Objekt durch das unbemannte Fahren bewegt; und
einer ersten Bestimmungseinheit (230), die dazu konfiguriert ist, einen Teil des sich bewegenden Objekts, der als der Erkennungspunkt verwendet werden soll, als Reaktion auf die erfassten Umgebungsinformationen zu bestimmen, wobei die erste Bestimmungseinheit dazu konfiguriert ist, alternativ als Reaktion auf die Umgebungsinformationen den Teil als einen linken Teil oder einen rechten Teil des sich bewegenden Objekts zu bestimmen.

8. Steuerverfahren, das umfasst:
einen Schritt zum Erfassen eines Bildes für die Erkennung, das aus der Bildaufnahme eines sich bewegenden Objekts resultiert, wobei das Bild für die Erkennung einen vorbestimmten Erkennungspunkt beinhaltet, der für das unbemannte Fahren des sich bewegenden Objekts verwendet wird,
**gekennzeichnet durch** das weitere Umfassen von:
einen Schritt zum Erfassen von Umgebungsinformationen, die eine Umgebung angeben, in der sich das sich bewegende Objekt durch das unbemannte Fahren bewegt, wobei die Umgebungsinformationen wenigstens eines von Informationen, die den Zeitpunkt der Bewegung des sich bewegenden Objekts durch das unbemannte Fahren angeben, und Informationen beinhaltet, die einen Ort angeben, an dem sich das sich bewegende Objekt durch das unbemannte Fahren bewegt; und
einen Schritt zum Bestimmen wenigstens eines Teils des sich bewegenden Objekts, der als der Erkennungspunkt verwendet werden soll, als Reaktion auf die erfassten Umgebungsinformationen, wobei alternativ als Reaktion auf die Umgebungsinformationen der Teil als ein linker Teil oder ein rechter Teil des sich bewegenden Objekts bestimmt wird.

## Revendications

1. Système (10) comprenant :
un objet en mouvement configuré pour se déplacer par conduite sans pilote en utilisant un point de détection prédéterminé compris dans une image de détection résultant de la prise d'image de l'objet en mouvement,
une unité d'acquisition d'image (210) configurée pour acquérir l'image de détection, et
une unité d'acquisition d'informations d'environnement (220) configurée pour acquérir des informations d'environnement indicatives de l'environnement dans lequel l'objet en mouvement se déplace par conduite sans pilote, lesdites informations d'environnement comprenant des informations indicatives du temps de déplacement de l'objet en mouvement par conduite sans pilote et/ou des informations indicatives du lieu où l'objet en mouvement se déplace par conduite sans pilote ;
**caractérisé en ce qu'**il comprend en outre :
une première unité de détermination (230) configurée pour déterminer au moins une partie de l'objet en mouvement à utiliser comme point de détection en réaction aux informations d'environnement acquises, ladite première unité de détermination étant configurée pour déterminer ladite partie comme étant soit une partie latérale gauche, soit une partie latérale droite de l'objet en mouvement en réaction aux informations d'environnement.

2. Système (10) selon la revendication 1, comprenant en outre :
une pluralité de caméras (300) pour la prise d'image de l'objet en mouvement, et
une deuxième unité de détermination (240) configurée pour déterminer la caméra (300) de la pluralité de caméras (300) en tant que caméra responsable (300) de la prise d'image de détection en réaction aux informations d'environnement, la caméra (300) déterminée étant disponible pour la prise d'image de détection de manière à remplir une condition relative à ladite partie déterminée et/ou à ladite direction de prise d'image déterminée ;
ladite unité d'acquisition d'image (210) acquérant l'image de détection à partir de la caméra (300) responsable.

3. Système (10) selon la revendication 1, dans lequel :
la première unité de détermination (230) est en outre configurée pour déterminer ladite partie comme étant soit un coin arrière gauche, soit un coin arrière droit de l'objet en mouvement en réaction aux informations d'environnement.

4. Système (10) selon l'une quelconque des revendications 1 à 3, comprenant en outre :
une troisième unité de détermination (245) configurée pour déterminer les détails d'un processus d'estimation en réaction à ladite partie déterminée et/ou à ladite direction de prise d'image déterminée, le processus d'estimation étant un processus d'estimation d'un emplacement de l'objet en mouvement destiné à être utilisé pour générer une instruction permettant de commander la conduite sans pilote au moyen du point de détection dans l'image de détection.

5. Système (10) selon la revendication 4, dans lequel :
l'objet en mouvement est un véhicule (100),
la première unité de détermination (230) est en outre configurée pour déterminer au moins la partie à utiliser comme point de détection,
la première unité de détermination (230) est en outre configurée pour déterminer ladite partie comme étant soit une première partie (Dp1), soit une deuxième partie (Dp2) du véhicule, lesquelles sont symétriques l'une à l'autre dans le sens de la largeur du véhicule, en réaction aux informations d'environnement, ladite première partie (Dp1) étant un coin arrière gauche du véhicule et la deuxième partie (Dp2) un coin arrière droit du véhicule,
si la deuxième partie (Dp2) est utilisée comme point de détection, la troisième unité de détermination (245) est en outre configurée pour déterminer l'exécution d'un processus au cours du processus d'estimation, le processus déterminé étant un processus visant à générer une image inversée par inversion miroir de l'image de détection et à détecter la deuxième partie (Dp2) dans l'image inversée, et
si la première partie (Dp1) est utilisée comme point de détection, la troisième unité de détermination (245) est en outre configurée pour déterminer l'exécution d'un processus au cours du processus d'estimation, le processus déterminé étant un processus visant à détecter la première partie (Dp1) dans l'image de détection sans inversion miroir.

6. Système (10) selon la revendication 4, dans lequel :
la troisième unité de détermination (245) est en outre configurée pour déterminer les détails du processus d'estimation en déterminant un programme à utiliser au cours du processus d'estimation en réaction à ladite partie déterminée et/ou ladite direction de prise d'image déterminée.

7. Dispositif de commande (200) comprenant :
une unité d'acquisition d'image (210) configurée pour acquérir une image de détection résultant de la prise d'image d'un objet en mouvement, l'image de détection comprenant un point de détection prédéterminé utilisé pour la conduite sans pilote de l'objet en mouvement,
**caractérisé en ce qu'**il comprend en outre :
une unité d'acquisition d'informations d'environnement (220) configurée pour acquérir des informations d'environnement indicatives d'un environnement dans lequel l'objet en mouvement se déplace par conduite sans pilote, lesdites informations d'environnement comprenant des informations indicatives du temps de déplacement de l'objet en mouvement par conduite sans pilote et/ou des informations indicatives du lieu où l'objet en mouvement se déplace par conduite sans pilote ; et
une première unité de détermination (230) configurée pour déterminer une partie de l'objet en mouvement à utiliser comme point de détection en réaction aux informations d'environnement acquises, ladite première unité de détermination étant configurée pour déterminer ladite partie comme étant soit une partie latérale gauche, soit une partie latérale droite de l'objet en mouvement en réaction aux informations d'environnement.

8. Procédé de commande comprenant :
une étape d'acquisition d'une image de détection résultant d'une prise d'image d'un objet en mouvement, l'image de détection comprenant un point de détection prédéterminé utilisé pour la conduite sans pilote de l'objet en mouvement,
**caractérisé en ce qu'**il comprend en outre :
une étape d'acquisition d'informations d'environnement indicatives d'un environnement dans lequel l'objet en mouvement se déplace par conduite sans pilote, lesdites informations d'environnement comprenant des informations indicatives du temps de déplacement de l'objet en mouvement par conduite sans pilote et/ou des informations indicatives du lieu où l'objet en mouvement se déplace par conduite sans pilote ; et
une étape de détermination d'au moins une partie de l'objet en mouvement à utiliser comme point de détection en réaction aux informations d'environnement acquises, ladite partie étant déterminée comme étant soit une partie latérale gauche, soit une partie latérale droite de l'objet en mouvement en réaction aux informations d'environnement.
